Europäisches Patentamt

European Patent Office

Office européen des brevets

(19)

(11) **EP 0 488 542 B1**

(12) **EUROPEAN PATENT SPECIFICATION**

(45) Date of publication and mention
of the grant of the patent:
**06.03.1996  Bulletin 1996/10**

(51) Int Cl.$^6$: **H04N 5/20**

(21) Application number: **91310305.7**

(22) Date of filing: **07.11.1991**

(54) **Picture quality improving circuit**

Schaltung zur Verbesserung der Bildqualität

Circuit d'amélioration de la qualité de l'image

(84) Designated Contracting States:
**DE FR GB IT**

(30) Priority: **19.11.1990 JP 313542/90**

(43) Date of publication of application:
**03.06.1992  Bulletin 1992/23**

(73) Proprietor: **MATSUSHITA ELECTRIC
INDUSTRIAL CO., LTD.
Kadoma-shi, Osaka-fu, 571 (JP)**

(72) Inventors:
• **Sakashita, Hirohiko**
  **Nara-shi (JP)**
• **Okumura, Naoji**
  **13-55, Nishishoji-2-chome, Minoo-shi (JP)**

(74) Representative: **Votier, Sidney David**
**CARPMAELS & RANSFORD
43, Bloomsbury Square
London WC1A 2RA (GB)**

(56) References cited:
**EP-A- 0 034 737         FR-A- 2 452 216
US-A- 3 979 555         US-A- 4 337 514**

## Description

BACKGROUND OF THE INVENTION

This invention relates to picture quality improving technique for obtaining automatically an optimum image by catching the characteristics of an input image in apparatuses handling video signals such as a television receiver, a VCR, etc, particularly in apparatuses for digital processing signals in a video chromatic signal processing circuit.

Digitization of apparatuses handling video signals has made steady progress in recent years and this trend has also spread to apparatuses for home and private use such as television receivers and VCRs. This technique is expected to reduce the number of necessary components and to improve reliability. Moreover, since a video chromatic signal processing circuit, in particular, can be easily developed to an EDTV due to digitization, this technique is believed to be very promising.

In analog television, on the other hand, a remarkable progress has been made and a very clear image can be reproduced, as well.

However, both analog television and digital television use a cathode-ray tube (CRT), which is the most ordinary display device at present. However, the dynamic range of the CRT is extremely narrower in comparison with natural light. This narrowness of the dynamic range in the display capacity imposes various limitations such as blooming which occurs in a scene where luminance signals are bright, and the problem that black gradation cannot be expressed in a dark scene.

US-A-4337514 describes a device for controlling the transfer function of a video system to ensure that an image containing the maximum amount of information is obtained at the receiver. In this device, an equal distribution of the histogram of the amplitudes of the luminance signal is chosen, and a complex arrangement is described in which eight variable transfer parameters are determined.

FR-A-2452216 describes the processing of a video signal, e.g. to enhance information concerning a controlled object. In this case, analog video signals are compared with a plurality of reference values in respective comparators. The outputs of these comparators are then fed to respective counters, by means of AND-gates supplied with a clock pulse. Thus, at any particular time, the system provides an output which indicates the magnitude of the analog signal in relation to a plurality of different threshold levels.

In accordance with the present invention, there is provided a picture quality improving circuit as defined by claim 1 hereinbelow.

In the preferred embodiment of the present invention, a cumulative histogram circuit comprises first to $n$th, or $n$, comparison circuits for inputting digital encoded input signals and comparing them with n, mutually different, reference values, respectively; and first to $n$th, or $n$,

counters for inputting the output signals of the comparison circuits and carrying out a count-up operation when the reference values are greater, respectively; wherein the comparison operations are carried out up to a predetermined number of times to obtain a cumulative histogram at the output of each of the counters.

The picture quality improving circuit further comprises a first selector for inputting $n$ signals, that is, the maximum value of an input luminance signal and first to (n - l)th cumulative histogram values, and selecting either one of the inputs by using upper $m$ bits of the input luminance signals as a control signal; a second selector for inputting the signals of first to (n - l)th cumulative histogram values, and selecting either one of said inputs by using upper $m$ bits of the input luminance signal as a control signal; a subtraction circuit for inputting the output signal of the first selector and the output signal of the second selector and calculating their difference; a multiplication circuit for inputting lower (i - m) bits of the input luminance signal and the output signal of the subtraction circuit, and multiplying them; and an addition circuit for adding the output signal of the multiplication circuit and the output signal of the second selector.

The picture quality improving circuit further comprises a latch circuit for temporarily storing the histogram signal obtained by the cumulative histogram circuit; and an interpolation circuit for inputting the input luminance signal as well as the output histogram signal of the latch circuit and interpolating the input signal into a line graph similar to the histogram signal.

In the cumulative histogram circuit, luminance components of an input luminance signal are detected as a cumulative histogram.

The interpolation circuit then corrects a luminance signal in real time by the information of the cumulative histogram.

The cumulative histogram of the input luminance signal is directly calculated, which enables an operation in real time in the interpolation circuit on the basis of the result of calculation, and correction of picture quality by displaying the result of the operation.

BRIEF DESCRIPTION OF THE DRAWINGS

Fig. 1 is a block diagram of a cumulative histogram circuit according to a first embodiment of the present invention;

Fig. 2 is a block diagram of an interpolation circuit according to a second embodiment of the present invention;

Fig. 3 is a block diagram of a picture quality correction circuit according to a third embodiment of the present invention; and

Fig. 4 is a characteristic diagram useful for explaining the input signal from the cumulative histogram circuit in Fig. 2.

## DESCRIPTION OF THE PREFERRED EMBODIMENTS

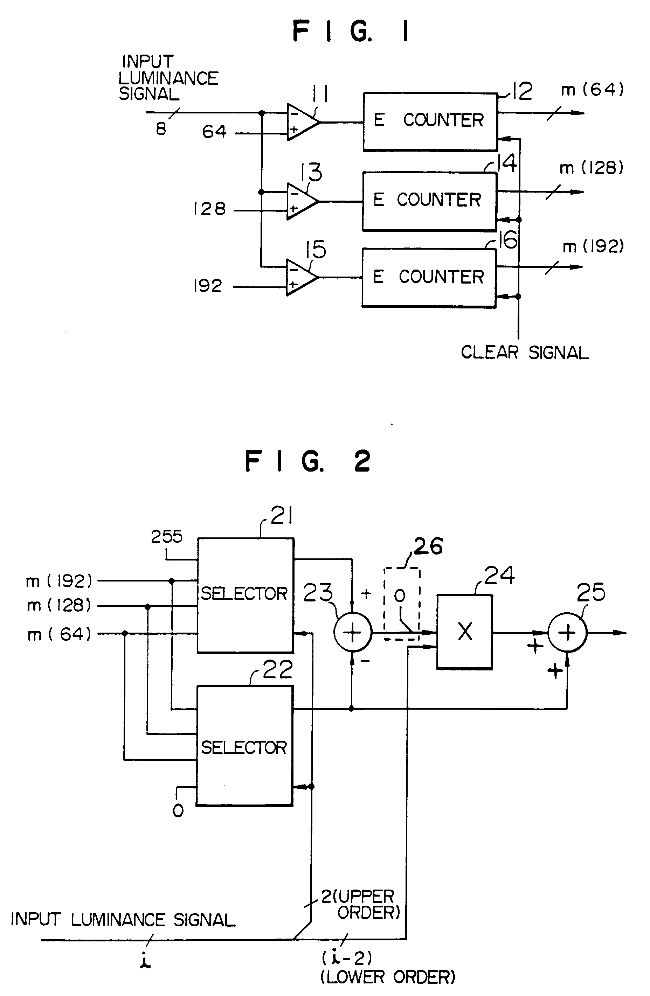

Hereinafter, a cumulative histogram circuit in an embodiment of the present invention will be explained with reference to the accompanying drawings. Fig. 1 is a block diagram showing a cumulative histogram circuit claimed in the appended Claim 1. To simplify the description, this embodiment will be explained about the case where the distribution of a luminance signal is divided into four parts to obtain three histograms and interpolation is made between the four.

In Fig. 1, reference numeral 11 denotes a first comparison circuit which receives a digital encoded 8-bit input luminance signal and compares this input luminance signal with a certain first reference value. Reference numeral 12 denotes a first counter which receives the output signal of the first comparison circuit 11 and makes a count-up operation when the first reference value (64) is greater. Reference numeral 13 denotes a second comparison circuit which receives the input luminance signal and compares the input luminance signal with a certain second reference value (128). Reference numeral 14 denotes a second counter which receives the output signal of the second comparison circuit 13 and makes a count-up operation when the second reference value is greater. Reference numeral 15 denotes a third comparison circuit which receives the input luminance signal and compares the input luminance signal with a certain third reference value (192). Reference numeral 16 denotes a third counter which receives the output signal of the third comparison circuit 15 and makes a count-up operation when the third reference value is greater.

The operation of the cumulative histogram circuit having the construction described above will be explained with reference to Fig. 1.

To begin with, the input luminance signal is inputted to the three comparison circuits 11, 13 and 15, respectively. Assuming that the input luminance signal is 100, for example, the first comparison circuit 11 outputs 0 because the input luminance signal is greater than the reference value (64) but the second and third comparison circuits 13 and 15 output 1 because the input luminance signal is smaller than the second and third reference values, respectively. Therefore, though the first counter 12 does not make its count-up operation, the second and third counters 14, 16 do make the count-up operation. If this sampling is effected 256 times, the output becomes automatically 256 because the value 256 is higher than all the input luminance signals, though the histogram when a luminance signal level is at 256 is not hereby taken. A cumulative histogram can be obtained by connecting 0, the output of the first counter 12, the output of the second counter 14, the output of the third counter 16 and 256.

As described above, the picture quality improving circuit of this embodiment comprises the first comparison circuit which receives the digital encoded 8-bit input luminance signal and compares it with a certain reference value, the first counter which receives the output signal of the first comparison circuit and makes its count-up operation when the first reference value (64) is greater, a second comparison circuit which receives the input luminance signal and compares it with a certain second reference value (128), the second counter which receives the output signal of the second comparison circuit 13 and makes its count-up operation when the second reference value is greater, the third comparison circuit which receives the input luminance signal and compares it with a certain reference value (192), and the third counter which receives the output signal of the third comparison circuit 15 and makes its count-up operation when the third reference value is greater. Therefore, the cumulative histogram can be obtained at the output of each counter by effecting the comparison operation up to a predetermined number of times.

Next, the interpolation circuit of the present embodiment will be explained with reference to the drawings. Fig. 2 is a block diagram of an interpolation circuit claimed in the appended Claim 2.

In Fig. 2, reference numeral 21 denotes a first selector which receives $n$ signals from first and second cumulative histogram values to (n-l)th cumulative histogram value and selects any of the inputs by using upper $m$ bits of the input luminance signal as a control signal. Reference numeral 22 denotes a second selector which receives the first, second to (n-l)th signals of the cumulative histogram values and selects any of the inputs by using the upper $m$ bits of the input luminance signal as a control signal. Reference numeral 23 denotes a subtraction circuit which receives the output signal of the first selector 21 and that of the second selector 22 and calculates their difference. Reference numeral 24 denotes a multiplication circuit which receives the lower (i - m) bits of the input luminance signal as well as the output signal of the subtraction circuit described above, and carries out multiplication between them. Reference numeral 25 denotes an addition circuit which adds the output signal of the multiplication signal 24 to the output signal of the second selector 22.

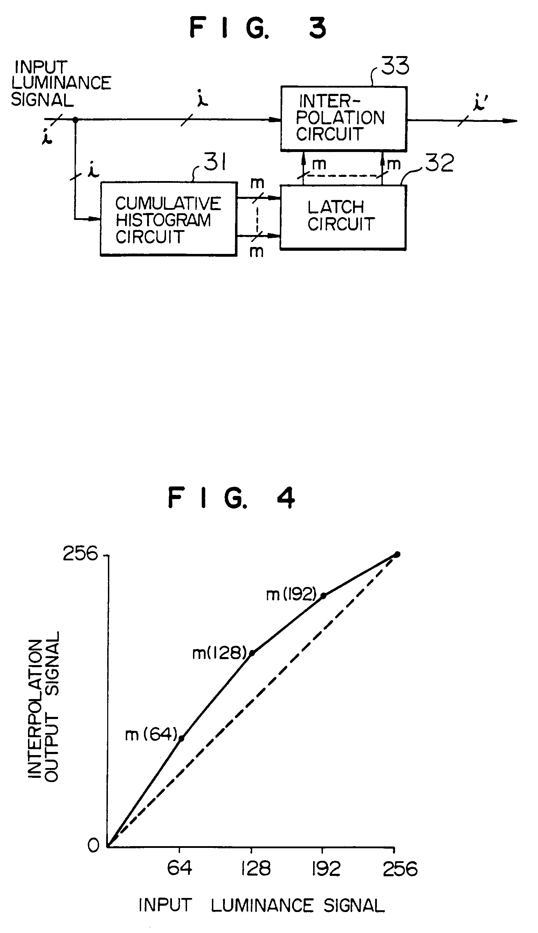

The operation of the interpolation circuit having the construction described above will be explained with reference to Figs. 2 and 4.

First of all, the numeric value which needs to be interpolated will be explained with reference to Fig. 4.

In Fig. 4, the abscissa represents the input luminance signal and the ordinate does the amplitude of the output signal of the interpolation circuit. In this diagram, dotted line represents the original characteristics and solid line does the interpolation characteristics which need to be obtained.

Assuming that the input luminance signal is 100, its output value $\underline{y}$ can be obtained by the following equation (1) using the values $\underline{m}$ (64) and $\underline{m}$ (128) before and after the input luminance signal value 100 among the calculation results of histograms:

$$y = \frac{m\ (128)\ -\ m\ (64)}{128\ -\ 64}\ x\ (100 - 64)\ +\ m\ (64)\quad(1)$$

In the equation given above, (128 - 64) of the denominator is always 64 and constant in other regions, too. Since the region of distribution is divided into four parts in this embodiment, the denominator can be replaced by 64. This can be achieved by a hardware construction so as to shift 6 bits to lower bits.

Next, an example in which the equation described above is executed will be explained with reference to Fig. 2.

In Fig. 2, the upper 2 bits of the input luminance signal are first taken out in order to detect in which of the following ranges the level of the input signal exists:

(0 - 63, 64 - 127, 128 - 191, 192 - 255)

For, since the region is divided into four parts, it is possible to know in which region the numeric value exists, by referring to the upper 2 bits.

If the input signal is 100, for example, the upper two bits in binary code becomes 0lb. The suffix "b" represents that the numeric value is expressed by the binary code. At this time, the first selector 21 selects $\underline{m}$ (128) and the second selector 22 does $\underline{m}$ (64). The subtraction circuit 23 carries out subtraction between the output signal of the first selector 21 and the output signal of the second selector 22, and executes $\underline{m}$ (128) - $\underline{m}$ (64) of the equation (1). Next, the output of the subtraction circuit 23 is shifted by 6 bits to the lower bits and is inputted as one of the inputs of the multiplication circuit 24. The lower 6 bits of the input luminance signal are inputted as the other input of the multiplication circuit 24, and multiplication is carried out between them. These operations accomplish the division by (128 - 64) and subtraction (100 - 64) in the first term of the equation (1). Next, the output signal of the multiplication circuit 24 is inputted as one of the inputs of the addition circuit 25 and the value m(64) is inputted as the other so as to carry out addition between them. In this way, the addition of the second term of the equation (1) is achieved.

As described above, this embodiment can obtain the interpolated output in real time by the use of the result of cumulative histograms.

An embodiment of the over-all arrangement of the picture quality improving circuit of the present invention will now be described with reference to the drawings. Fig. 3 is a block diagram showing a picture quality improving circuit according to this embodiment.

Referring to Fig. 3, a cumulative histogram circuit receiving a digital encoded input luminance signal for obtaining a cumulative histogram is represented by reference numeral 31. A latch circuit for temporarily storing the histogram signal obtained by the cumulative histogram circuit 31 is represented by reference numeral 32. An interpolation circuit receiving the input luminance signal and the output histogram signal of the latch circuit 32 for interpolating the input signal into a line graph similar to the histogram signal is represented by reference numeral 33.

The picture quality improving circuit having the construction described above operates in the following way.

The input luminance signal is inputted to the cumulative histogram circuit 31 to obtain the cumulative histogram of the input luminance signal. The output signal of the cumulative histogram circuit 31 is inputted to the latch circuit 32, which keeps this value until the cumulative histogram circuit 31 executes the next operation and outputs its output signal.

On the other hand, the input luminance signal is inputted to the interpolation circuit 33 and its value is corrected by the use of the cumulative histogram outputted by the latch circuit 32. This correction operation is carried out in real time by effecting interpolation by the use of the data of the cumulative histogram.

If, for example, the luminance distribution of the input luminance signals has a large number of dark signals, the output signals of the cumulative histogram circuit 31 describes an upwardly projecting graph as depicted in Fig. 4. The characteristics of this cumulative histogram are inputted to the interpolation circuit 33 through the latch circuit 32, and the luminance signal inputted to the interpolation circuit 33 is corrected to the output signal which is interpolated by this straight line. Accordingly, if the input luminance signal contains a large number of dark signals, the dark portion is stretched in a bright direction and outputted.

As described above, a picture quality improving circuit which expands the dynamic range of the luminance signal by the luminance distribution of the input luminance signal can be obtained by providing the cumulative histogram circuit receiving the digital encoded input luminance signal for obtaining the cumulative histogram, the latch circuit for temporarily storing the histogram signals obtained in the cumulative histogram circuit, and the interpolation circuit receiving the input luminance signal and the output histogram signal of the latch circuit for interpolating the input signal into the line graph similar to the input histogram signal.

In the cumulative histogram circuit described above, division is made into four parts for the ease of explanation, but cumulative histograms of a greater number of divisions may be acquired by increasing the number of divisions and conducting more delicate control.

In the cumulative histogram circuit, the input luminance signal is the luminance signal of 256 steps (8-bits), by way of example. Therefore, the cumulative histogram of one cycle is obtained by conducting 256 times the counting operation. However, the cumulative histogram may be obtained by effecting N times this operation and then dividing the resulting cumulative histograms by N. In such a case, a cumulative histogram having higher stability may be obtained due to the integration effect even if any fluctuation exists in the input luminance signal.

Though the continuous input luminance signals are measured in the cumulative histogram circuit, the data throughout the entire screen can be effectively used if sampling is carried out with suitable intervals so that 256 sampling points exist throughout the screen.

If the data of the full surface of the screen are used in the cumulative histogram circuit as described above, an error is likely to occur. If a motion picture of a panorama size is vertically cut by black and is transmitted in a so-called "letter box", for example, a large number of black portions which are not the image portions and wrong cumulative histogram will be obtained if the data of the full surface of the screen are employed. In such a case, the operation should be carried out by the luminance signals only at the center portion of the screen and the upper and lower portions of the screen should be masked.

As described above, a preferred embodiment of the present invention provides a picture quality improving circuit for expanding the dynamic range of a luminance signal according to the luminance distribution of the input luminance signal, which comprises the cumulative histogram circuit receiving the digital encoded input luminance signal for obtaining the cumulative histogram, the latch circuit for temporarily storing the histogram signal obtained in the cumulative histogram circuit, and the interpolation circuit receiving the input luminance signal as well as the output histogram signal of the latch circuit for interpolating the input signal into the line graph similar to the histogram signal.

## Claims

1. A picture quality improving circuit comprising:

cumulative histogram means (31) for receiving an input signal having a level variable within a predetermined range and obtaining a cumulative histogram of said input signal for a predetermined period, said cumulative histogram representing relationships between a plurality of selected levels of said input signal and corresponding histogram values each representing a number of samples of said input signal whose levels are less than a respective one of said selected levels;

storing means (32) for temporarily storing said histogram values; and

interpolation means (33) for receiving said input signal and said histogram values from said storing means (32) and calculating a level of a corrected output signal corresponding to the input signal by interpolation as a value corresponding to the level of the input signal and in dependence on said cumulative histogram; characterized in that said interpolation means (33) includes:

a first selector (21) for determining a first one of said selected levels which is closest to and greater than a level of the input signal and outputting a first one of said histogram values corresponding to the level of said first one of said selected levels;

a second selector (22) for determining a second one of said selected levels which is closest to and not greater than the level of the input signal and outputting a second one of said histogram values corresponding to the level of said second one of said selected levels; and

calculation means (23,24,25,26) for calculating a level of a corrected signal corresponding to said input signal by interpolating the level of said input signal between said first one and said second one of said histogram values.

2. A picture quality improving circuit according to claim 1, wherein:

said input signal is a digitally encoded input signal having i bits (where i is an integer larger than 1);

said first and second selectors (21,22) determine said first and second ones of said histogram values, respectively, based on the most significant m bits of said input signal (where m is an integer larger than O and less than i); and said calculation means includes a subtraction circuit (23) for calculating a difference between said first and second ones of said histogram values, bit shifting means (26) for shifting each bit of said difference in a lower direction by (i-m) places, a multiplication circuit (24) for multiplying an output of said bit shifting means by a signal comprising the least significant (i-m) bits of said input signal, and an addition circuit (25) for adding said second one of said histogram values and an output of said multiplication circuit (24) so as to obtain the level of said corrected output signal.

3. A picture quality improving circuit according to claim 1 or claim 2, wherein said cumulative histogram means (31) includes:

a plurality of comparison circuits (11,13,15) for comparing a level of each of said samples of said input signal with said selected levels and generating output pulses, respectively, when the level of said sample of said input signal is less than a respective one of said selected levels; and

a plurality of counters (12,14,16) for counting said output pulses of said comparison circuits, respectively, for said predetermined period to carry out a sampling operation and obtain count values representing said histogram values, and outputting said count values.

**4.** A picture quality improving circuit according to claim 3, and arranged to carry out said sampling operation at predetermined intervals such that said comparison circuits receive 256 samples of said input signal corresponding to a full surface of a screen.

**5.** A picture quality improving circuit according to claim 3, further comprising means for limiting said sampling operation to be carried out only at a center portion of a screen so that upper and lower portions of said screen are masked.

**Patentansprüche**

**1.** Bildqualitätsverbesserungsschaltung mit:

einer Kumulativhistogrammeinrichtung (31) zum Empfangen eines Eingangssignals mit einem innerhalb eines vorbestimmten Bereichs variablen Pegel und Gewinnen eines Kumulativhistogramms des Eingangssignals für einen vorbestimmten Zeitraum, wobei das Kumulativhistogramm Beziehungen zwischen einer Vielzahl ausgewählter Pegel des Eingangssignals und entsprechenden Histogrammwerten, die jeweils eine Anzahl von Abtastungen des Eingangssignals darstellen, deren Pegel niedriger als ein entsprechender der ausgewählten Pegel liegen, darstellt;

einer Speichereinrichtung (32) zum vorübergehenden Speichern der Histogrammwerte; und

einer Interpolationseinrichtung (33) zum Empfangen des Eingangssignals und der Histogrammwerte aus der Speichereinrichtung (32) und Berechnen eines Pegels eines dem Eingangssignal entsprechenden korrigierten Ausgangssignals durch Interpolation als ein dem Pegel des Eingangssignal entsprechender Pegel und abhängig von dem Kumulativhistogramm;

dadurch gekennzeichnet, daß die Interpolationseinrichtung (33) aufweist:

eine erste Auswahleinrichtung (21) zum Bestimmen eines ersten der ausgewählten Pegel, der am nächsten an und größer als ein Pegel des Eingangssignals ist, und Ausgeben eines dem Pegel des ersten der ausgewählten Pegel entsprechenden ersten der Histogrammwerte;

eine zweite Auswahleinrichtung (22) zum Bestimmen eines zweiten der ausgewählten Pegel, der am nächsten an und nicht größer als der Pegel des Eingangssignals ist, und Ausgeben eines dem Pegel des zweiten der ausgewählten Pegel entsprechenden zweiten der Histogrammwerte; und

eine Berechnungseinrichtung (23, 24, 25, 26) zum Berechnen eines Pegels eines dem Eingangssignal entsprechenden korrigierten Signals durch Interpolieren des Pegels des Eingangssignals zwischen dem ersten und dem zweiten der Histogrammwerte.

**2.** Bildqualitätsverbesserungsschaltung nach Anspruch 1, bei der:

das Eingangssignal ein digital kodiertes Eingangssignal mit i Bits ist (wobei i eine ganze Zahl größer als 1 ist);

die erste und die zweite Auswahleinrichtung (21, 22) jeweils den ersten und den zweiten der Histogrammwerte bestimmen auf der Grundlage der signifikantesten m Bits des Eingangssignals (wobei m eine ganze Zahl größer als 0 und kleiner als i ist); und

die Berechnungseinrichtung eine Subtraktionsschaltung (23) zum Berechnen einer Differenz zwischen einem ersten und einem zweiten der Histogrammwerte, eine Bitverschiebungseinrichtung (26) zum Verschieben jedes Bits der Differenz in einer niedrigeren Richtung um (i-m)-Plätze, eine Multiplikationsschaltung (24) zum Multiplizieren eines Ausgangssignals der Bitverschiebungseinrichtung mit einem die am wenigsten signifikanten (i-m)-Bits des Eingangssignals beinhaltenden Signal und eine Additionsschaltung (25) zum Addieren des zweiten der Histogrammwerte und eines Ausgangssignals der Multiplikationsschaltung (24), um den Pegel des korrigierten Ausgangssignals zu gewinnen.

**3.** Bildqualitätsverbesserungsschaltung nach Anspruch 1 oder 2, bei der die Kumulativhistogrammeinrichtung (31) aufweist:

eine Vielzahl Vergleichsschaltungen (11, 13, 15) zum Vergleichen eines Pegels jeder der Abtastungen des Eingangssignals mit den ausgewählten Pegeln und jeweils Erzeugen von Ausgangspulsen, wenn der Pegel der Abtastung des Eingangssignals niedriger als ein entsprechender der ausgewählten Pegel ist; und

eine Anzahl von Zählern (12, 14, 16) zum jeweils Zählen der Ausgangspulse der Vergleichsschaltungen für den vorbestimmten Zeitraum zum Ausführen einer Abtastoperation und Gewinnen von die Histogrammwerte darstellenden Zählwerten und Ausgeben der Zählwerte.

4. Bildqualitätsverbessserungsschaltung nach Anspruch 3 und dazu ausgelegt, die Abtastoperation so in vorbestimmten Intervallen auszuführen, daß die Vergleichsschaltungen 256 Abtastungen des Eingangssignals entsprechend einer gesamten Oberfläche eines Bildschirms empfangen.

5. Bildqualitätsverbesserungsschaltung nach Anspruch 3, ferner mit einer Einrichtung zum Begrenzen der Abtastoperation, so daß diese nur in einem zentralen Abschnitt eines Bildschirms ausgeführt wird, so daß obere und unter Abschnitte des Bildschirms maskiert sind.

## Revendications

1. Circuit pour améliorer la qualité d'une image, comportant :

des moyens d'histogramme cumulatif (31) pour recevoir un signal d'entrée ayant un niveau variable situé dans une plage prédéterminée et pour obtenir un histogramme cumulatif dudit signal d'entrée pour une période prédéterminée, ledit histogramme cumulatif représentant la relation existant entre plusieurs niveaux sélectionnés dudit signal d'entrée et des valeurs d'histogramme correspondantes représentant chacune un certain nombre d'échantillons dudit signal d'entrée dont les niveaux sont inférieurs à un niveau respectif parmi lesdits niveaux sélectionnés,

des moyens de mémorisation (32) pour mémoriser temporairement lesdites valeurs d'histogramme, et

des moyens d'interpolation (33) pour recevoir ledit signal d'entrée et lesdites valeurs d'histogramme provenant desdits moyens de mémorisation (32) et pour calculer le niveau d'un signal de sortie corrigé correspondant au signal d'entrée, par interpolation, en tant que valeur correspondant au niveau du signal d'entrée et en dépendance avec ledit histogramme cumulatif,

caractérisé en ce que lesdits moyens d'interpolation (33) comportent :

un premier sélecteur (21) pour déterminer un premier niveau, parmi lesdits niveaux sélectionnés, qui soit le plus proche possible d'un niveau du signal d'entrée et lui soit supérieur et pour délivrer une première desdites valeurs d'histogramme correspondant au premier niveau parmi lesdits niveaux sélectionnés,

un second sélecteur (22) pour déterminer un second niveau, parmi lesdits niveaux sélectionnés, qui soit le plus proche possible du niveau du signal d'entrée et lui soit supérieur et pour délivrer une seconde desdites valeurs d'histogramme correspondant audit second niveau parmi lesdits niveaux sélectionnés, et

des moyens de calcul (23, 24, 25, 26) pour calculer le niveau d'un signal corrigé correspondant audit signal d'entrée en interpolant le niveau dudit signal d'entrée entre ladite première et ladite seconde valeur parmi lesdites valeurs d'histogramme.

2. Circuit pour améliorer la qualité d'une image selon la revendication 1, dans lequel :

ledit signal d'entrée est un signal d'entrée codé numériquement comportant i bits (où i est un nombre entier supérieur à 1),

lesdits premier et second sélecteurs (21, 22) déterminent lesdites première et seconde valeurs desdites valeurs d'histogramme, respectivement, sur la base des m bits de poids le plus fort dudit signal d'entrée (où m est un nombre entier supérieur à 0 et inférieur à i), et

lesdits moyens de calcul comportent un circuit de soustraction (23) pour calculer la différence entre lesdites première et seconde valeurs desdites valeurs d'histogramme, des moyens de décalage de bit (26) pour décaler chaque bit de ladite différence, dans la direction du bit de poids le plus faible, de (i - m) emplacements, un circuit de multiplication (24) pour multiplier la sortie desdits moyens de décalage de bit par un signal constitué des (i - m) bits de poids le plus faible dudit signal d'entrée, et un circuit d'addition (25) pour additionner ladite seconde valeur parmi lesdites valeurs d'histogramme avec une sortie dudit circuit de multiplication (24), de manière à obtenir le niveau dudit signal de sortie corrigé.

3. Circuit pour améliorer la qualité d'une image selon la revendication 1 ou 2, dans lequel lesdits moyens d'histogramme cumulatif (31) comportent :

plusieurs circuits de comparaison (11, 13, 15) pour comparer le niveau de chacun desdits échantillons dudit signal d'entrée auxdits niveaux sélectionnés et pour engendrer des impulsions de sortie, respectivement, lorsque le niveau desdits échantillons dudit signal d'entrée est inférieur à un niveau respectif parmi lesdits niveaux sélectionnés, et

plusieurs compteurs (12, 14, 16) pour compter lesdites impulsions de sortie desdits circuits de comparaison, respectivement, pendant ladite période prédéterminée afin d'effectuer une opération d'échantillonnage et pour obtenir des valeurs de comptage représentant lesdites valeurs d'histogramme, et pour délivrer lesdites valeurs de comptage.

4. Circuit pour améliorer la qualité d'une image selon la revendication 3, et agencé pour effectuer ladite opération d'échantillonnage au niveau d'intervalles prédéterminés, de sorte que lesdits circuits de comparaison reçoivent 256 échantillons dudit signal d'entrée correspondant à toute la surface d'un écran.

5. Circuit pour améliorer la qualité d'une image selon la revendication 3, comportant en outre des moyens pour limiter ladite opération d'échantillonnage afin que celle-ci ne soit effectuée que sur une partie centrale d'un écran, de sorte que les parties supérieure et inférieure dudit écran soient masquées.

# F I G. 1

INPUT LUMINANCE SIGNAL

8    64

11

E COUNTER    12    m(64)

13

128

14    m(128)

E COUNTER

15

192

16    m(192)

E COUNTER

CLEAR SIGNAL

# F I G. 2

255

21

m(192)

m(128)

m(64)

SELECTOR    23    26    24    25

+    0    X    +

SELECTOR    22    +

0

INPUT LUMINANCE SIGNAL

i

2(UPPER ORDER)

(i-2)
(LOWER ORDER)

# F I G. 3

# F I G. 4